# EUROPEAN PATENT APPLICATION

(11) **EP 4 797 336 A1**
(43) Date of publication of application: **26.08.2026**
(21) Application number: 24879863.9
(22) Date of filing: 26.02.2024
(51) Int. Cl.: H01M 4/13, H01M 4/62, H01M 10/052, H01M 4/02

(54) **NEGATIVE ELECTRODE FOR ALL SOLID-STATE BATTERY AND ALL SOLID-STATE BATTERY INCLUDING SAME**

(30) Priority: 20.10.2023 KR 20230141470
(71) Applicant: SAMSUNG SDI CO., LTD., Yongin-si, Gyeonggi-do 17084 (KR)
(72) Inventor: YANG, Jinhoon, Yongin-si, Gyeonggi-do 17084 (KR); LEE, Jungho, Yongin-si, Gyeonggi-do 17084 (KR); KIM, Wonjung, Yongin-si, Gyeonggi-do 17084 (KR); SOHN, Juhee, Yongin-si, Gyeonggi-do 17084 (KR); SHIN, Hyuksoo, Yongin-si, Gyeonggi-do 17084 (KR); KIM, Yunsik, Yongin-si, Gyeonggi-do 17084 (KR)
(74) Representative: Michalski Hüttermann & Partner mbB
(86) International application number: PCT/KR2024/002457
(87) International publication number: WO 2025/084520

(57) **Abstract**

The present invention relates to a negative electrode for an all-solid-state battery including same. The negative electrode comprises: a carbon-based material; a metal; and a negative electrode coating layer comprising cerium oxide.

## Description

### TECHNICAL FIELD

Embodiments relate to a negative electrodefor an all-solid-state battery and an all-solid-state solid-state battery including the same.

### BACKGROUND ART

Recently, there has been a rapid progress in electric devices using batteries, e.g., mobile phones, laptop computers, and electric vehicles.

In such a battery, the development of an all-solid-state battery, which uses lithium metal as the negative electrode, is desired. The all-solid-state battery refers to a battery in which all materials are solids, e.g., a battery using a solid electrolyte. The all-solid-state battery is structurally strong because the electrolyte is solid, and thus, there is a reduced risk of fire or explosion caused by an electrolyte leakage due to external impact, or the like. The battery may be formed in various shapes.

### DETAILED DESCRIPTION OF THE INVENTION

### TECHNICAL PROBLEM

One embodiment provide a negative electrode for an all-solid-state battery exhibiting low resistance, thereby excellent coulombic efficiency and excellent cycle-life characteristic.

Another embodiment provides an all-solid-state battery including the negative electrode.

### TECHNICAL SOLUTION

One embodiment provides a negative electrode for an all-solid-state battery including a negative electrode coating layer including a carbon-based material; a metal; and cerium oxide.

Another embodiment provides an all-solid-state battery including the negative electrode, a positive electrode, and a solid electrolyte layer between the negative electrode and the negative electrode.

### ADVANTAGEOUS EFFECTS

A negative electrode for an all-solid-state battery according to one embodiment may exhibit excellent electrochemical performances such as overvoltage, charging and discharging efficiency, output characteristics.

### DESCRIPTION OF THE DRAWINGS

FIG. 1 is a schematic diagram schematically showing a negative electrode for an all-solid-state battery according to one embodiment.
FIG. 2 is a schematic diagram schematically showing an all-solid-state battery according to one embodiment.
FIG. 3 shows a cross-section image (A) and an EDAX result (B) of the negative electrode according to Example 1.

### BEST MODE FOR PERFORMING INVENTION

Example embodiments will now be described more fully hereinafter. Rather, these embodiments are provided so that this disclosure will be thorough and complete, and will fully convey exemplary implementations to those skilled in the art.

Terms used in the specification is used to explain embodiments, but are not intended to be limiting. Expressions in the singular include expressions in plural unless the context clearly dictates otherwise.

The term "combination thereof may include a mixture, a laminate, a complex, a copolymer, an alloy, a blend, a reactant of constituents.

The terms "comprise", "include" or "have" are intended to designate that the performed characteristics, numbers, step, constituted elements, or a combination thereof is present, but it should be understood that the possibility of presence or addition of one or more other characteristics, numbers, steps, constituted element, or a combination are not to be precluded in advance.

In the specification, unless explicitly described to the contrary, the word "comprise" and variations such as "comprises" or "comprising" will be understood to imply the inclusion of stated elements but not the exclusion of any other element.

The terms "about" and "substantially" used throughout the present specification refer to the meaning of the mentioned with inherent preparation and material permissible errors when presented, and are used in the sense of being close to or near that value. They are used to help understand the present invention and to prevent unconscientious infringers from unfairly exploiting the disclosure where accurate or absolute values are mentioned.

In the specification, A and/or B and A or B are not exclusive terms, and indicate A, B, or both A and B.

Unless otherwise defined in the specification, it will be understood that when an element, such as a layer, a film, a region, a plate, and the like is referred to as being "on" or "over" another element, it may be directly on, connected to, or coupled to the other element or layer, or one or more intervening elements may be present.

In the present invention, "particle size" or "a particle diameter", may be an average particle diameter. Unless otherwise defined in the specification, the average particle diameter may be defined as an average particle diameter D50 indicating the diameter of particles having a cumulative volume of 50 volume % in the particle size distribution. The particle size may be measured by a method well known to those skilled in the art, for example, by a particle size analyzer, or by a transmission electron microscopic image, a scanning electron microscopic image), or a field emission scanning electron microscopy (FE-SEM). In another embodiments, a dynamic light-scattering measurement device is used to perform a data analysis, and the number of particles is counted for each particle size range, and from this, the average particle diameter (D50) value may be easily obtained through a calculation, or a laser diffraction method. The laser diffraction may be obtained by distributing particles to be measured in a distribution solvent and introducing it to a commercially available laser diffraction particle measuring device (e.g., MT 3000 available from Microtrac, Inc.), irradiating ultrasonic waves of 28 kHz at a power of 60 W, and calculating an average particle diameter (D50) in the 50 % standard of particle distribution in the measuring device. Alternatively, the average particle diameter may be one in which the sizes of the particle (diameter or length of the major axis) of 20 particles are randomly measured in a scanning electron microscope image to obtain a particle size distribution, and the diameter (D50) of the particles having a cumulative volume of 50 volume % in the particle size distribution is taken as the average particle size.

The term "thickness" may be measured through a photograph taken with an optical microscope such as a scanning electron microscope.

A negative electrode for an all-solid-state battery according to one embodiment includes a negative electrode coating layer including a carbon-based material, a metal, and cerium oxide.

In one embodiment, the term "the negative electrode coating layer" refers to a layer that helps the movement of lithium ions released from the positive electrode active material to the negative electrode during charging and discharging of the all-solid-state battery, thereby facilitating their deposition on the surface of the current collector. For example, a lithium deposition layer, due to the deposition of lithium ions between the current collector and the negative electrode coating layer is formed, and the lithium deposition layer acts as a negative electrode active material, and this negative electrode generally referred to as a deposition-type negative electrode. The metal and the carbon-based material included in the negative electrode coating layer do not act as negative electrode active materials which directly participate in the charge and discharge reaction. Such a deposition-type negative electrode represents a negative electrode that does not include a negative electrode active material during the battery preparation, but the lithium deposition layer acts as a negative electrode active material.

Cerium oxide is a lithiophilic material and lithium ions may smoothly transfer through cerium oxide which is friendly to lithium, as a pathway during charge and discharge. Furthermore, lithium ions may transfer through vacancy of an oxygen structure in cerium oxide, thereby further improving lithium ion conductivity. Accordingly, an addition of cerium oxide may dramatically improve lithium ion conductivity.

In one embodiment, cerium oxide may be CeO₂, Ce₂O₃, or a combination thereof.

In one embodiment, an amount of cerium oxide may be 1 wt% to 30 wt%, 1 wt% to 20 wt%, or 1 wt% to 15 wt% based on the total 100 wt% of the negative electrode coating layer. If the amount of cerium oxide is included in the range, an effect of improving lithium ion conductivity may be effectively obtained.

In one embodiment, a particle diameter of cerium oxide may be 5 nm to 3000 nm, 30 nm to 1000 nm, 30 nm to 800 nm, 30nm to 500nm, 30nm to 100nm, 30 nm to 70 nm, 40 nm to 60 nm, or 45 nm to 55 nm. If the particle diameter of cerium oxide falls within the range, the reaction with lithium ions may proceed uniformly during charging, which may be advantageous in terms of volume expansion.

In the coating layer according to one embodiment, the carbon-based material and the metal may be present as a mixture, or the metal may be present in a form supported on the carbon-based material.

The carbon-based material may be, for example, carbon black, acetylene black, denka black, Ketjen black, furnace black, activated carbon, graphene, or a combination thereof. The carbon black may be Super P (available from Timcal Ltd.). The carbon-based material is not limited thereto, and The amorphous carbon is not limited thereto, and any material which may be classified as amorphous carbon in the field may be available.

In one embodiment, the carbon-based material may be a single particle, a secondary particle in which a plurality of primary particles is agglomerated. If the carbon-based material is single particles, the size of the carbon-based material may have an average particle diameter of 100 nm or less, for example, a nanosize of 10 nm to 100 nm.

If the carbon-based material is an agglomerated product, the particle diameter of the primary particle may be 20 nm to 100 nm and the particle diameter of the secondary particle may be 1 µm to 20 µm.

In one embodiment, a particle diameter of the primary particles may be 20 nm to 100 nm, 20 nm to 90 nm, 20 nm to 80 nm, or 30 nm to 70 nm.

In one embodiment, a particle diameter of the secondary particle may be 1 µm to 20 µm, 2 µm to 15 µm, or 3 µm to 10 µm.

The shape of the primary particle may be spherical, oval, plate-shaped, or combinations thereof, and in one embodiment, the shape of the primary particle may be spherical, oval, or combinations thereof.

The metal may be Ag, Au, Sn, Zn, Al, Mg, Ge, Cu, In, Ni, Bi, Pt, Pd, or a combination thereof, or may be Ag. The inclusion of such a metal in the negative electrode coating layer may result in improved electrical conductivity.

The metal may be nano particles and the size of the metal nano particles, for example, an average size, may be 5 nm to 800 nm, 5 nm to 700 nm, 5 nm to 500 nm, or 5 nm to 300 nm, but it is limited thereto, if it has nanometers, it may be appropriately used. By using such nano-sized metal nanoparticles, battery characteristics, for example, cycle-life characteristics of the all-solid-state battery, may be improved. If the size of the metal particles increases to a micrometer unit, the uniformity of the metal particles is reduced in the negative electrode coating layer, and thus, a current density is increased at a specific region, thereby deteriorating the cycle-life characteristics.

In one embodiment, an amount of the metal may be, based on the total 100 wt% of the negative electrode coating layer, 1 wt% to 50 wt%, or, 1 wt% to 30 wt%, 1 wt% to 15 wt%, 1 wt% to 10 wt%, 3 wt% to 6 wt%, 4 wt%, or 5 wt%.

Furthermore, the carbon-based material may be, based on the total 100 wt% of the negative electrode coating layer, 20 wt% to 99 wt%, or 20 wt% to 90 wt%, 30 wt% to 90 wt%, 50 wt% to 90 wt%, 70 wt% to 90 wt%, 80 wt% to 90 wt%, 83 wt% to 87 wt%, 85 wt%, or 86 wt%.

In one embodiment, the negative electrode coating layer may further include a binder. The binder may be, for example, a styrene butadiene rubber (SBR), polytetrafluoroethylene, polyvinylidene fluoride, polyethylene, a vinylidene fluoride/hexafluoropropylene copolymer, polyacrylonitrile, polymethyl methacrylate, carboxymethylcellulose, hydroxypropyl cellulose, diacetyl cellulose, or a combination thereof. The carboxymethylcellulose, hydroxypropyl cellulose, or diacetyl cellulose may be present in the form of an alkali metal salt thereof and the alkali metal may be Na or Li. The binder is not limited thereto, and any binder known in the relevant art may be utilized.

An amount of the binder may be, based on the total weight of the negative electrode coating layer, 0.1 wt% to 20 wt%, or 0.1 wt% to 10 wt%. Within the above amount range, the binder may exhibit sufficient adhesive strength without deteriorating battery performance.

In one embodiment, the negative electrode coating layer may further include a solid electrolyte. The solid electrolyte may be an inorganic solid electrolyte such as a sulfide-based solid electrolyte, an oxide-based solid electrolyte, a halide-based solid electrolyte, and the like, or a solid polymer electrolyte.

In one embodiment, the sulfide-based solid electrolyte may be Li₂S-P₂S₅, Li₂S-P₂S₅-LiX (where X is an halogen element, for example, I, or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are each an integer of 0 or more and 12 or less, Z is Ge, Zn, or Ga), Li₂S-GeS₂, Li₂S-SiS₂-Li₃PO₄, Li₂S-SiS₂-LiₚMO_{q} (where p and q are each an integer of 0 or more and 12 or less and M is P, Si, Ge, B, Al, Ga, or In), LiₐM_{b}P_{c}S_{d}Aₑ (where a, b, c, d, and e are each an integer of 0 or more and 12 or less, M is Ge, Sn, Si, or a combination thereof, and A is F, Cl, Br, or I ). The sulfide-based solid electrolyte may be, for example, Li₇₋ₓPS₆₋ₓFₓ (0≤x≤2), Li₇₋ₓPS₆₋ₓClₓ (0≤x≤2), Li₇₋ₓPS₆₋ₓBrₓ (0≤x≤2) or Li₇₋ₓPS₆₋ₓIₓ (0≤x≤2). In one embodiment, it may be Li₃PS₄,

Li₇P₃S₁₁, Li₇PS₆, Li₆PS₅Cl, Li₆PS₅Cl, Li₆PS₅I, Li₆PS₅Br, Li_{5.8}PS_{4.8}Cl_{1.2}, Li_{6.2}PS_{5.2}Br_{0.8}, or the like.

In one embodiment, the sulfide-based solid electrolyte may be an argyrodite-type sulfide-based solid electrolyte. The argyrodite-type sulfide-based solid electrolyte may be, for example, LiₐM_{b}P_{c}S_{d}Aₑ (where a, b, c, d, and e are each an integer of 0 or more and 12 or less, M is Ge, Sn, Si, or a combination thereof, and A is F, Cl, Br, or I).

In one embodiment, it may include Li₃PS₄, Li₇P₃S₁₁, Li₇PS₆, Li₆PS₅Cl, Li₆PS₅Br, Li_{5.8}PS_{4.8}Cl_{1.2}, Li_{6.2}PS_{5.2}Br_{0.8}, Li₆PS₅I, Li_{5.75}PS_{4.75}Cl_{1.25}, (Li5.69Cu0.06)PS4.75Cl1.25, (Li5.72Cu0.03)PS4.75Cl1.25, (Li5.69Cu0.06)P(S4.70(SO4)0.05)Cl1.25, (Li5.69Cu0.06)P(S4.60(SO4)0.15)Cl1.25, (Li5.72Cu0.03)P(S4.725(SO4)0.025)Cl1.25, (Li5.72Na0.03)P(S4.725(SO4)0.025)Cl1.25, Li_{5.75}P(S_{4.725}(SO₄)_{0.025})Cl_{1.25}, or a combination thereof, but is not limited thereto.

The sulfide-based solid electrolyte may be amorphous, crystalline, or a combination thereof. The sulfide-based solid electrolyte may be prepared, for example, by mixing Li₂S and P₂S₅ at a mole ratio of 50:50 to 90:10, or 50:50 to 80:20. In the range of the mixing ratio, the sulfide-based solid electrolyte exhibiting excellent ionic conductivity may be prepared. As other components, SiS₂, GeS₂, B₂S₃, or the like may be further included thereto, thereby further improving ionic conductivity.

The mixing procedure of the sulfur-included source for preparing the sulfide-based solid electrolyte may be performed by a mechanical milling or a solution method. Mechanical milling is a method in which starting raw material, a ball mill or the like are introduced into a reactor and vigorously agitated to pulverize the starting raw material into fine particles and mix them. The solution method may provide a solid electrolyte as a precipitate by mixing starting raw material in a solvent. In addition, if the heat treatment is performed after mixing, the crystal structure of the solid electrolyte may be further stabilized and ionic conductivity may be further improved. For example, the sulfide-based solid electrolyte may be prepared by mixing sulfur-included raw materials and heat-treating them twice or more, which may provide a sulfide-based solid electrolyte with high ionic conductivity and rigidity.

The sulfide-based solid electrolyte may be a commercial solid electrolyte.

The oxide-based inorganic solid electrolyte may be, for example, Li₁₊ₓTi₂₋ₓAl(PO₄)₃(LTAP) (0≤x≤4), Li_{1+x+y}AlₓTi₂₋ₓSi_{y}P_{3-y}O₁₂ (0<x<2, 0≤y<3), BaTiO₃, Pb(Zr,Ti)O₃(PZT), Pb₁₋ₓLaₓZr_{1-y}Ti_{y}O₃(PLZT) (0≤x<1, 0≤y<1), Pb (Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titaniumphosphate (LiₓTi_{y}(PO₄)₃, 0<x<2, 0<y<3), Li_{1+x+y}(Al, Ga)ₓ(Ti, Ge)₂₋ₓSi_{y}P_{3-y}O₁₂ (0≤x≤1, 0≤y≤1), lithium lanthanumtitanate (LiₓLa_{y}TiO₃, 0<x<2, 0<y<3), Li₂O, LiAlO₂, Li₂O-Al₂O₃-SiO₂-P₂O₅-TiO₂-GeO₂-based ceramics, Garnet-based ceramics, Li₃₊ₓLa₃M₂O₁₂ (where M= Te, Nb, or Zr, x is an integer of 1 to 10), or a mixture thereof.

The solid polymer electrolyte may include at least one selected from, for example, polyethylene oxide, poly(diallyldimethyl ammonium)trifluoromethanesulfonylimide (TFSI), Cu₃N, Li₃N, LiPON,

Li₃PO₄.Li₂S.SiS₂, Li₂S.GeS₂.Ga₂S₃, Li₂O.11Al₂O₃, Na₂O.11Al₂O₃, (Na,Li)₁₊ₓTi₂₋ₓAlₓ(PO₄)₃ (0.1≤x≤0.9), Li₁₊ₓHf₂₋ₓAlₓ(PO₄)₃ (0.1≤x≤0.9), Na₃Zr₂Si₂PO₁₂, Li₃Zr₂Si₂PO₁₂, Na₅ZrP₃O₁₂, Na₅TiP₃O₁₂, Na₃Fe₂P₃O₁₂, Na₄NbP₃O₁₂, Na-Silicates, Li_{0.3}La_{0.5}TiO₃, Na₅MSi₄O₁₂ (where M is a rare earth element such as Nd, Gd, Dy, or the like) Li₅ZrP₃O₁₂, Li₅TiP₃O₁₂, Li₃Fe₂P₃O₁₂, Li₄NbP₃O₁₂, Li₁₊ₓ(M,Al,Ga)ₓ (Ge_{1-y}Ti_{y})₂₋ₓ(PO₄)₃ (0≤x≤0.8, 0≤y≤1.0, M is Nd, Sm, Eu, Gd, Tb, Dy, Ho, Er, Tm, or Yb), Li_{1+x+y}QₓTi₂₋ₓSi_{y}P_{3-y}O₁₂ (0<x≤0.4, 0<y≤0.6, Q is Al or Ga), Li₆BaLa₂Ta₂O₁₂, Li₇La₃Zr₂O₁₂, Li₅La₃Nb₂O₁₂, Li₅La₃M₂O₁₂ (where M is Nb or Ta) and Li₇₊ₓAₓLa₃₋ₓZr₂O₁₂ (0<x<3, A is Zn).

The halide-based solid electrolyte may include a Li element, a M element (where M is a metal except for Li), and a X element (where X is a halogen). The X may be, for example, F, Cl, Br and I. In one embodiment, the halide-based solid electrolyte may include at least one of Br and Cl, as the X. The M may be, for example, a metal element such as Sc, Y, B, Al, Ga, In, and the like.

The composition of the halide-based solid electrolyte is not limited, but the halide-based solid electrolyte may be represented by Li₆₋₃ₐMₐBr_{b}Cl_{c} (where, M is a metal, except for Li, 0<a<2, 0≤b≤6, 0≤c≤6, b+c=6). The a may be 0.75 or more, or 1 or more, and the a may be 1.5 or less. The b may be 1 or more, or 2 or more. The c may be 3 or more, or 4 or more. The exemplary of the halide-based solid electrolyte may be Li₃YBr₆, Li₃YCl₆ or Li₃YBr₂Cl₄.

The negative electrode coating layer may further include, for example, additives such as a filler, a dispersing agent, an ionic conductive material, and the like. As the filler, the dispersing agent, the ionic conductive material that may be included in the negative electrode coating layer, a well-known material generally used in the all-solid-state battery may be utilized.

A thickness of the negative electrode coating layer may be, for example, 1 µm to 500 µm, 1 µm to 200 µm, 1 µm to 100 µm, or 1 µm to 50 µm, but is not limited thereto.

The negative electrode according to one embodiment may further include a current collector supporting the negative electrode coating layer.

The current collector may be, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may have a foil shape or a sheet shape. A thickness of the negative electrode current collector may be 1 µm to 20 µm, 5 µm to 15 µm, or 7 µm to 10 µm.

The current collector may include a metal substrate and may further include a thin film formed on the substrate. The thin film may include an element capable of forming an alloy with lithium, for example, gold, silver, zinc, tin, indium, silicon, aluminum, bismuth, or a combination thereof, but is not limited thereto, and any elements capable of forming an alloy with lithium in the relevant art may also be utilized. If the current collector further includes a thin film, lithium deposited during charging may form a more planar lithium-containing layer, which may further improve the cycle-life characteristics of the all-solid-state battery.

A thickness of the thin membrane may be 1 nm to 800 nm, 10 nm to 700 nm, 50 nm to 600 nm, or 100 nm to 500 nm. If the thickness of the thin film is within the range, the cycle-life characteristics may be further enhanced.

According to one embodiment, the negative electrode may further include a lithium-containing layer formed between the current collector and the negative electrode coating layer upon the initial charging after the battery fabrication. For example, the thickness of the lithium-containing layer may be 1 µm to 1000 µm, 1 µm to 500 µm, 1 µm to 200 µm, 1 µm to 150 µm, 1 µm to 100 µm, or 1 µm to 50 µm. If the thickness of the lithium-containing layer is satisfied in the range, it may effectively perform the role of a lithium reservoir and the cycle-life characteristics may be further enhanced.

The lithium-containing layer may be formed after battery fabricated during charging, as lithium ions are released from a positive electrode active material, pass through the solid electrolyte, and move toward the negative electrode, and consequently participated and deposited on the current collector.

The charging may be a formation process which may be carried out at 0.05 C to 1 C at approximately 25 °C to 50 °C once to three times. If lithium is participated and deposited to form the lithium-containing layer, lithium included in the lithium-containing layer is ionized during discharge and moves toward the positive electrode, and thus, this lithium may be utilized as a negative electrode active material.

In one embodiment, as the lithium-containing layer is positioned between the current collector and the negative electrode coating layer, the negative electrode coating layer may serve as a protecting layer for the lithium-containing layer, and thus, the deposition growth of lithium dendrite may be suppressed. This enables to inhibit capacity fading and short-circuit of the all-solid-state battery and resultantly improve the cycle-life of the all-solid-state battery.

### <All-solid-state battery>

The all-solid-state battery according to one embodiment includes the negative electrode, a positive electrode, and a soild electrolyte layer between the negative electrode and the positive electrode.

### <Solid electrolyte layer>

In one embodiment, the solid electrolyte layer may include a solid electrolyte. The solid electrolyte may be an inorganic solid electrolyte such as a sulfide-based solid electrolyte, an oxide-based solid electrolyte, a halide-based solid electrolyte, and the like, or solid polymer electrolyte.

In one embodiment, the solid electrolyte may be the sulfide-based solid electrolyte. The sulfide-based solid electrolyte may have superior ionic conductivity and may exhibit excellent cycle-life characteristics over a wider operation range than other solid electrolytes such as an oxide-based solid electrolytes.

The sulfide-based solid electrolyte, oxide-based solid electrolyte, halide-based solid electrolyte, and solid polymer electrolyte are the same as those described above. In addition, the solid electrolyte included in the solid electrolyte layer may be the same as or different from the solid electrolyte included in the negative electrode coating laye.

### The solid electrolyte may have a particle shape

The solid electrolyte may have an average particle diameter D50 of 5.0 µm or less, for example, 0.1 µm to 5.0 µm, 0.5 µm to 5.0 µm, 0.5 µm to 4.0 µm, 0.5 µm to 3.0 µm, 0.5 µm to 2.0 µm, or 0.5 µm to 1.0 µm..

The solid electrolyte layer may further include a binder. The binder may be a styrene butadiene rubber, polytetrafluoroethylene, polyvinylidene fluoride, polyethylene, an acrylate-based polymer, or a combination thereof, but is not limited thereto, and may be any material which is generally used in the related art. The acrylate-based polymer may be butyl acrylate, polyacrylate, polymethacrylate, or a combination thereof.

In the solid electrolyte layer, an amount of the binder may be appropriately adjusted, and it is not limited thereto.

The solid electrolyte layer may be prepared by adding a solid electrolyte to a binder solution, coating it on a substrate film, and drying it. The binder solution may include isobutyryl isobutylate, xylene, toluene, benzene, hexane, or a combination thereof, as a solvent. The solid electrolyte layer preparation is widely known in the art, so a detailed description thereof will be omitted in the specification.

The solid electrolyte layer may have a thickness, for example, of 10 µm to 150 µm.

The solid electrolyte layer may further include an alkali metal salt, and/or an ionic liquid, and/or a conductive polymer.

The alkali metal salt may be, for example, a lithium salt. In the solid electrolyte layer, an amount of the lithium salt may be 1 M or more, for example, 1 M to 4 M. In this case, the lithium salt may improve the lithium ion mobility of the solid electrolyte layer, thereby improving ionic conductivity.

The lithium salt, may be, for example, LiSCN, LiN(CN)₂, Li(CF₃SO₂)₃C, LiC₄F₉SO₃, LiN(SO₂CF₂CF₃)₂, LiCl, LiF, LiBr, LiI, LiB(C₂O₄)₂, LiBF₄, LiBF₃(C₂F₅), lithium bis(oxalato) borate, LiBOB), lithium oxalyldifluoroborate, LIODFB), lithium difluoro(oxalato)borate (LiDFOB), lithium bis(trifluoro methanesulfonyl)imide, LiTFSI, LiN(SO₂CF₃)₂), lithium bis(fluorosulfonyl)imide, LiFSI, LiN(SO₂F)₂), LiCF₃SO₃, LiAsF₆, LiSbF₆, LiClO₄, or a mixture thereof.

The lithium salt may be an imide-based, for example, the imide-based lithium salt may be lithium bis(trifluoro methanesulfonyl)imide (LiTFSI, LiN(SO₂CF₃)₂), lithium bis(fluorosulfonyl)imide (LiFSI, or LiN(SO₂F)₂). The lithium salt may suitably maintain the chemical reactivity with the ionic liquid, and thus, the ionic conductivity may be maintained or improved.

The ionic liquid refers to salts composed soley of ions that has a melting point at a room temperature or less and is in a liquid state at a room temperature, or a room-temperature molten salt.

The ionic liquid may be a compound including a) at least one cation selected from a) ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, triazolium-based, or a mixture thereof, and b) at least one anion selected from BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, BF₄⁻, SO₄⁻, CF₃SO₃⁻, (FSO₂)₂N⁻, (C₂F₅SO₂)₂N⁻, (C₂F₅SO₂)(CF₃SO₂)N⁻, or (CF₃SO₂)₂N⁻.

The ionic liquid may be, for example, at least one selected from N-methyl-N-propylpyrrolidinium bis(trifluoromethanesulfonyl)imide, N-butyl-N-methylpyrrolidinium bis (3-trifluoromethylsulfonyl)imide, 1-butyl-3-methylimidazolium bis(trifluoromethylsulfonyl)amide, or 1-ethyl-3-methylimidazolium bis(trifluoromethylsulfonyl)amide.

In the solid electrolyte layer, the weight ratio btween the solid electrolyte and the ionic liquid may range from 0.1:99.9 to 90:10, for example, from 10:90 to 90:10, from 20:80 to 90:10, from 30:70 to 90:10, from 40:60 to 90:10, or from 50:50 to 90:10. The solid electrolyte layer within the range may have an improved electrochemical contact area to the electrode, and thus, the ionic conductivity may be maintained or improved. Accordingly, the energy density, discharge capacity, rate capability, or the like of the all-solid-state rechargeable battery may be improved.

### <Positive electrode>

The positive electrode for the all-solid-state battery according to one embodiment includes a positive electrode current collector and a positive electrode active material layer on one surface of the positive current collector.

The positive electrode active material layer may include a positive electrode active material. The positive electrode active material may include compounds that reversibly intercalate and deintercalate lithium ions. For example, the positive electrode active material may include one or more composite oxides of a metal selected from cobalt, manganese, nickel, and a combination thereof, and lithium. The examples of the positive electrode active material may be LiₐA_{1-b}B¹_{b}D¹₂ (0.90≤a≤1.8, 0≤b≤0.5); LiₐE_{1-b}B¹_{b}O_{2-c}D¹_{c} (0.90≤a≤1.8, 0≤b≤0.5, 0≤c≤0.5); LiₐE_{2-b}B¹_{b}O_{4-c}D¹_{c} (0.90≤a≤1.8, 0≤b≤0.5, 0≤c≤05); LiₐNi_{1-b-c}Co_{b}B¹_{c}D¹_{α} (0.90≤a≤1.8, 0≤b≤0.5, 0≤c≤0.5, 0<α≤2); LiₐNi_{1-b-c}Co_{b}B¹_{c}O_{2-α}F¹_{α} (0.90≤a≤1.8, 0≤b≤0.5, 0≤c≤0.5, 0<α<2); LiₐNi_{1-b-c}Co_{b}B¹_{c}O_{2-α}F¹₂ (0.90≤a≤1.8, 0≤b≤0.5, 0≤c≤0.5, 0<α<2); LiₐNi_{1-b-c}Mn_{b}B¹_{c}D¹_{α} (0.90≤a≤1.8, 0≤b≤0.5, 0≤c≤0.5, 0<α≤2); LiₐNi_{1-b-c}Mn_{b}B¹_{c}O_{2-α}F¹_{α} (0.90≤a≤1.8, 0≤b≤0.5, 0≤c≤0.5, 0<α<2); LiₐNi_{1-b-c}Mn_{b}B¹_{c}O_{2-α}F¹₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ ( 0.90≤a≤1.8, 0.001≤b≤0.1); LiₐCoG_{b}O₂ (0.90≤a≤1.8, 0.001≤b≤ 0.1); LiₐMnG_{b}O₂ (0.90≤a≤1.8, 0.001≤b≤0.1); LiₐMn₂G_{b}O₄ (0.90≤a≤1.8, 0.001≤b ≤0.1); QO₂; QS₂; LiQS₂; V₂O₅; LiV₂O₅; LiI¹O₂; LiNiVO₄; Li_{(3-f)}J₂(PO₄)₃ (0≤f≤2); Li_{(3-f)}Fe₂(PO₄)₃ (0≤f≤2); or LiFePO₄.

In the chemical formulas A is selected from Ni, Co, Mn, or a combination thereof; B1 is selected from Al, Ni, Co, Mn, Cr, Fe, Mg, Sr, V, a rare earth element, or a combination thereof; D1 is selected from O, F, S, P, or combination thereof; E is selected from Co, Mn, or combination thereof; F1 is selected from F, S, P, or a combination thereof; G is selected from Al, Cr, Mn, Fe, Mg, La, Ce, Sr, V, or a combination thereof; Q is selected from Ti, Mo, Mn, or a combination thereof; I¹ is selected from Cr, V, Fe, Sc, Y, or a combination thereof; J is selected from V, Cr, Mn, Co, Ni, Cu, or a combination thereof; L1 is selected from Mn, Al, or a combination thereof.

According to oen embodiment, the positive electrode active material may be a three-component-based lithium transition metal oxide such as LiNiₓCo_{y}Al_{z}O₂(NCA), LiNiₓCo_{y}Mn_{z}O₂(NCM) (wherein, 0<x<1, 0<y<1, 0<z<1, x+y+z=1), or the like.

The compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or mixture thereof. The coating layer may be formed by any coating method that does not adversely affect the properties of the positive electrode active material, for example, spray coating, dipp coating, or thelike, and a detailed description thereof is not illustrated since such methods will be readily understood by those of ordinary skill in the art.

The coating layer may be any coating materials which are known as a coating layer for the positive electrode active material of the all-solid-state battery. For example, it may be a buffer layer which serves to reduce an interface resistance between the positive electrode active material and the solid electrolyte. For example, the buffer layer may include lithium-metal-oxide and this metal may be one or more elements selected from Al, B, Ca, Ce, Cr, Fe, Mg, Mo, Nb, Si, Sn, Sr, Ta, V, W, or Zr. The example of the buffer layer may be Li₂O-ZrO₂(LZO), LiNbO₂, or the like.

If the positive electrode active material is ternary material including nickel, cobalt, and manganese, or nickel, cobalt, and aluminum, the capacity density of the all-solid-state battery may be further improved, metal dissolution from the positive electrode active material in acharged state may be further reduced. This may render to further improve long-term reliability and cycle characteristics of the all-solid-state battery in charged state.

The average particle diameter of the positive electrode active material may be 1 µm to 25 µm, for example, 3 µm to 25 µm, 1 µm to 20 µm, 1 µm to 18 µm, 3 µm to 15 µm, or 5 µm to 15 µm. For example, the positive electrode active material may include small particles with an average particle diameter D50 of 1 µm to 9 µm and large particles with an average particle diameter D50 of 10 µm to 25 µm. The positive electrode active material with a particle diameter range may be harmoniously mixed with other components in the positive electrode active material layer and may achieve high capacity and high energy density.

The positive electrode active material may be secondary particle where a plurality of primary particles is agglomerated, or monocrystalline (single crystal). The shape of the positive electrode active material may be, a spherical shape, a shape close to spherical, or a particle shape such as polyhedron, or unspecified shape, or the like.

In the positive electrode active material layer, an amount of the positive electrode active material is not limited, and may be in any range which may be applied to a positive electrode layer of the conventional all-solid-state secondary battery. For example, based on the total 100 wt% of the positive electrode active material layer, the positive electrode active material may be included at 55 wt% to 99.5 wt%, for example, 65 wt% to 95 wt%, or 75 wt% to 91 wt%.

The positive electrode active material layer may further include a binder and/or a conductive material.

The binder may be polyvinyl alcohol, carboxymethyl cellulose, hydroxypropyl cellulose, diacetylcellulose, polyvinylchloride, carboxylated polyvinylchloride, polyvinyl fluoride, polyethylene oxide, polyvinyl pyrrolidone, polyurethane, polytetrafluoroethylene, polyvinylidene fluoride, polyvinylidene fluoride-hexafluoropropylene, polyethylene, polypropylene, a styrene-butadiene rubber, an acrylated styrene-butadiene rubber, an epoxy resin, nylon, or the like, but is not limited thereto.

The binder may be included in an amount of 0.1 wt% to 5 wt%, or 0.1 wt% to 3 wt% based on the total 100 wt% of the positive electrode active material layer. In the range of amount, the binder may exhibit sufficient adhesion ability without deteriorating the battery performance.

The conductive material is included to provide electrode conductivity, and any electrically conductive material may be used as a conductive material unless it causes a chemical change. Examples of the conductive material may include a carbon-based material such as natural graphite, artificial graphite, carbon black, acetylene black, ketjen black, carbon fiber, carbon nanofiber, carbon nanotube or the like; a metal-based material of a metal powder or a metal fiber including; copper, nickel, aluminum, silver, or the like; a conductive polymer such as polyphenylene derivatives; or mixtures thereof.

The conductive material may be included in an amount of 0.1 wt% to 5 wt%, or 0.1 wt% to 3 wt% based on the total 100 wt% of the positive electrode active material layer. The conductive material in the above amount range may improve the electrical conductivity without deteriorating battery performance.

The positive electrode active material layer may further include a solid electrolyte. The solid electrolyte included in the positive electrode active material layer may be an inorganic solid electrolyte such as a sulfide-based solid electrolyte, an oxide-based solid electrolyte, a halide-based solid electrolyte, or the like, or solid polymer electrolyte. The solid electrolyte may be the same as those describe above, and and it may be the same as or different from the solid electrolyte included in the solid electrolyte layer.

Based on the total weight of the positive electrode active material layer, the solid electrolyte may be included at an amount of 0.1 wt% to 35 wt%, for example, 1 wt% to 35 wt%, 5 wt% to 30 wt%, 8 wt% to 25 wt%, or 10 wt% to 20 wt%. If the solid electrolyte with the amount of the above range is included in the positive electrode, the efficiency and cycle-life characteristic of the all-solid-state battery may be improved, without deterioration of capacity. The solid electrolyte may be included in an amount of 0.1 10 wt% to 30 wt% based on the total 100 wt% of the positive electrode active material layer.

The positive current collector may be, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may have a foil shape or a sheet shape.

### < Elastic layer >

The all-solid-state battery according to one embodiment may further include an elastic layer which may buffer changes in thickness generated during charging and discharging. The elastic layer may be positioned between the negative electrode and a case.

The elastic layer may include materials having elasticity recovery rate of 50 % or more and insulating properties, and in one embodiment, may include a silicon rubber, an acryl rubber, a fluorine-based rubber, nylon, a synthetic rubber, or a combination thereof. The elastic material may be present in a form of a polymer sheet..

### <Fabircation of all-solid-state battery>

The all-solid-state battery according to one embodiment may be fabricated by positioning a negative electrode, a positive electrode, and a solid electrolyte between the negative electrode and the positive electrode to prepare an assembly and pressurizing the assembly.

The pressurization may be carried out at a temperature of 25 °C to 90 °C. The pressurization may be carried out under a pressure of 550 MPa or less, for example, 500 MPa or less, for example, a pressure of 1 MPa to 500 MPa. The pressurization time may be varied depending on temperature and pressure, for example, it may be less than 30 minutes. The pressurization may be carried out using, for example, isostatic press, roll press, plate press, or warm isostatic press (WIP).

The all-solid-state secondary battery may be an unit battery including a structure of the positive electrode/ the solid electrolyte layer/the negative electrode, a bicell including a structure of the positive electrode/the solid electrolyte layer/the negative electrode/the solid electrolyte layer/ the positive electrode, or a stacked battery where the unit batteries are repeated.

The shapes of the all-solid-state rechargeable battery are not limited, but, for example, a coin-type, a button-type, a sheet-type, a laminate-type, a cylindrical-type, or a flat-type, or the like. The all-solid-state rechargeable battery may be applied to large-sized batteries used in electric vehicles or the like. For example, the all-solid-state battery may be also used in hybrid vehicles such as a plug-in hybrid electric vehicle (PHEV), or the like. It may be applied to areas where a large amount of power storage is required, for example, it may also be applied to electric bicycles or power tools. Furthermore, the all-solid-state rechargeable battery may be used in various fields such as portable electronic devices.

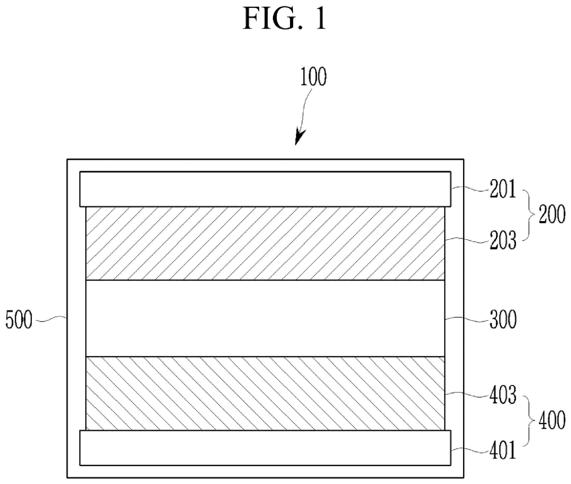

FIG. 1 is a cross-sectional view showing the all-solid-state battery according to embodiments. Referring to FIG. 1, the all-solid-state battery 100 may have a structure in which an electrode assembly is stacked with a negative electrode 400 including a negative electrode current collector 401 and a negative electrode coating layer 405, a solid electrolyte layer 300, and a positive electrode 200 including a positive electrode active material layer 203 and a positive current collector 201, is housed in a case such as a pouch, or the like. The all-solid-state battery 100 may further include an elastic layer 500 positioned on the outside of at least one of the positive electrode 200 and the negative electrode 400.

If the all-solid-state battery is charged, a lithium-containing layer (lithium deposition layer) may be formed by releasing lithium ions from the positive electrode active material to deposit on the negative electrode current collector 401 during charging.

FIG. 1 shows one electrode assembly including a negative electrode 400, a solid electrolyte layer 300, and a positive electrode 200, but an all-solid-state battery may be also be fabricated by stacking at least two electrode assemblies. For example, two to 100 electrode assemblies, three to 50 electrode assemblies, or 4 to 20 assemblies, or the like may be stacked.

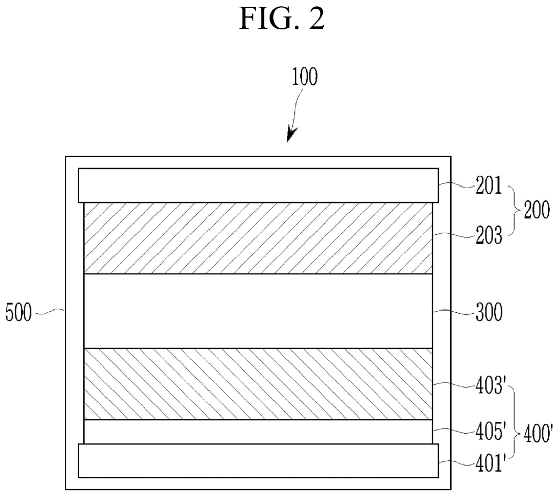

FIG. 2 schematically shows the all-solid-state battery of one embodiment. The all-solid-state battery 100 shown in FIG. 2 includes a positive electrode 200 including a positive current collector 201 and a positive electrode active material layer 203, a negative electrode 400 including a negative electrode current collector 401 and a negative electrode coating layer 403, a solid electrolyte 300 between the positive electrode 200 and the negative electrode 400, a battery case 500 in which these are housed, and a lithium deposition layer 405' between the negative current collector 401 and the negative coating layer 403.

### MODE FOR PERFORMING THE INVENTION

Hereinafter, examples of the present invention and comparative examples are described. These examples, however, are not in any sense to be interpreted as limiting the scope of the invention.

### (Example 1)

### (1) Preparation of negative electrode

8 wt% of a styrene-butadiene rubber, 5 wt% of Ag nanoparticles (D50: 60 nm), 86 wt% of carbon black, and 1 wt% of CeO₂ (D50: 50 nm) were mixed in a water solvent to prepare a negative electrode coating layer slurry. As the carbon black, a mixture of single particles with a particle diameter of 38 nm and secondary particles was used, and the secondary particles were aggregates of primary particles with a particle diameter of 76 nm and had a particle diameter of 275 nm.

The slurry was coated on a stainless steel foil current collector and vacuum dried at 100 °C to prepare a negative electrode including a 5 µm thick negative electrode coating layer and a 10 µm current collector.

### (2) Preparation of positive electrode

85 wt% of a LiNi_{0.8}Co_{0.15}Mn_{0.05}O₂ positive electrode active material, 13.5 wt% of a lithium argyrodite-type solid electrolyte Li₆PS₅Cl, 1.0 wt% of a polyvinylidene fluoride binder, and 0.5 wt% of a carbon nanotubes conductive material were mixed in an N-methyl pyrrolidone solvent to prepare a positive electrode composition.

The prepared positive electrode composition was coated on an aluminum positive electrode current collector, dried, and pressurized to prepare a positive electrode.

### (3) Preparation of solid electrolyte layer

To an argyrodite-type solid electrolyte Li₆PS₅Cl, a binder solution in which butyl acrylate as an acrylate-based polymer was added to an isobutylyl isobutylate binder solution (solid content: 50 wt%) was added and then mixed. A mixing ratio of the solid electrolyte and the binder was set to be a weight ratio of 98.7: 1.3.

The mixing process was carried out using a Thinky mixer. A 2 mm zirconia ball was added to the resulting mixture, and the mixture was repeatedly agitated using a Thinky mixer to prepare a slurry. The slurry was cast onto a release polytetrafluoroethylene film and dried at a room temperature to prepare a solid electrolyte layer with a thickness of 100 µm.

### (4) Fabrication of all-solid-state cell

The negative electrode, the solid electrolyte layer, and the positive electrode were sequentially stacked and the stcak was isostatically pressed udner a press of 8 MPa to fabricate an all-solid-state cell.

### (Example 2)

A negative electrode was prepared by the same manner as in Example 1, except that 6 wt% of a styrene-butadiene rubber, 4 wt% of Ag nanoparticles (D50: 60 nm), 85 wt% of carbon black, and 5 wt% of CeO₂ (D50: 50 nm) were mixed in a water solvent to prepare a negative electrode coating layer slurry.

An all-solid-state cell was fabricated in the same manner as in Example 1 using the negative electrode, and the positive electrode and the solid electrolyte prepared in the Example 1.

### (Example 3)

A negative electrode was prepared by the same manner as in Example 1, except that 4 wt% of a styrene-butadiene rubber, 4 wt% of Ag nanoparticles (D50: 60 nm), 85 wt% of carbon black, and 7 wt% of CeO₂ (D50: 50 nm) were mixed in a water solvent to prepare a negative electrode coating layer slurry.

An all-solid-state cell was fabricated in the same manner as in Example 1 using the negative electrode, and the positive electrode and the solid electrolyte prepared in the Example 1.

### (Example 4)

A negative electrode was prepared by the same manner as in Example 1, except that 1 wt% of a styrene-butadiene rubber, 4 wt% of Ag nanoparticles (D50: 60 nm), 85 wt% of carbon black, and 10 wt% of CeO₂ (D50: 50 nm) were mixed in a water solvent to prepare a negative electrode coating layer slurry.

An all-solid-state cell was fabricated in the same manner as in Example 1 using the negative electrode, and the positive electrode and the solid electrolyte prepared in the Example 1.

### (Comparative Example 1)

A negative electrode was prepared by the same manner as in Example 1, except that 11 wt% of a styrene-butadiene rubber, 4 wt% of Ag nanoparticles (D50: 60 nm), and 85 wt% of carbon black were mixed in a water solvent to prepare a negative electrode coating layer slurry.

An all-solid-state cell was fabricated in the same manner as in Example 1 using the negative electrode, and the positive electrode and the solid electrolyte prepared in the Example 1.

### (Comparative Example 2)

11 wt% of styrene-butadiene rubber and 89 wt% of CeO₂ were mixed in a water solvent to prepare a first layer slurry.

11 wt% of styrene-butadiene rubber, 4 wt% of Ag nanoparticles (D50: 60 nm), and 85 wt% of carbon black were mixed in a water solvent to prepare a second layer slurry.

After coating the first layer slurry on a stainless steel foil current collector and drying, the second layer slurry was coated and then the product was vacuum-dried at 100 °C to prepare a negative electrode including a 5 µm-thick first layer, a 5 µm-thick second layer, and a 10 µm-thick current collector.

An all-solid-state cell was fabricated in the same manner as in Example 1 using the negative electrode, and the positive electrode and the solid electrolyte prepared in the Example 1.

### (Comparative Example 3)

11 wt% of a styrene-butadiene rubber, 4 wt% of Ag nanoparticles (D50: 60 nm), and 85 wt% of carbon black were mixed in a water solvent to prepare a first layer slurry.

11 wt% of styrene-butadiene rubber and 89 wt% of CeO₂ were mixed in a water solvent to prepare a second layer slurry.

After coating the first layer slurry on a stainless steel foil current collector and drying, the second layer slurry was coated and then the product was vacuum-dried at 100 °C to prepare a negative electrode including a 5 µm-thick first layer, a 5 µm-thick second layer, and a 10 µm-thick current collector.

An all-solid-state cell was fabricated in the same manner as in Example 1 using the negative electrode, and the positive electrode and the solid electrolyte prepared in the Example 1.

### (Comparative Example 4)

A negative electrode was prepared by the same manner as in Example 1, except that 10.1 wt% of a styrene-butadiene rubber, 4 wt% of Ag nanoparticles (D50: 60 nm), 85 wt% of carbon black, and 0.9 wt% of CeO₂ (D50: 50 nm) were mixed in a water solvent to prepare a negative electrode coating layer slurry.

An all-solid-state cell was fabricated in the same manner as in Example 1 using the negative electrode, and the positive electrode and the solid electrolyte prepared in the Example 1.

### (Comparative Example 5)

A negative electrode was prepared by the same manner as in Example 1, except that 0.9 wt% of a styrene-butadiene rubber, 4 wt% of Ag nanoparticles (D50: 60 nm), 65 wt% of carbon black, and 30.1 wt% of CeO₂ (D50: 50 nm) were mixed in a water solvent to prepare a negative electrode coating layer slurry.

An all-solid-state cell was fabricated in the same manner as in Example 1 using the negative electrode, and the positive electrode and the solid electrolyte prepared in the Example 1.

### Experimental Example 1) Evaluation of layer separation

The layer separation of the all-solid-state cells according to Examples 1 to 4 and Comparative Examples 1 to 5 was evaluated as follows. After cross polishing was performed on the prepared negative electrode, a cross-section was observed using FE-SEM, and measurement was carried out by dividing the layer into upper and lowe portions based on half of the total thickness of the cross-section.

If layer separation did not occur, it was indicated as X; and if layer separation occurred, the region in which the layer separated is shown in Table 1.

### Experimental Example 2) Evaluation of overvoltage

The all-solid-state half-cells according to Examples 1 to 4 and Comparative Examples 1 to 5 were charged at 0.05 C, and a voltage drop began at the OCV (Open circuit voltage, approximately 2.5 V). Thereafter, the voltage was measured from this to the point where an inflection point occurred near 0 mV was measured. The results are shown as overvoltage in Table 2.

### Experimental Example 3) Evaluation of Initial efficiency

The all-solid-state half-cells according to Examples 1 to 4 and Comparative Examples 1 to 5 were once charged and discharged at 0.05 C and the percentage of discharge capacity relative to charge capacity was calculated. The results are shown as initial efficiency in Table 2.

### Experimental Example 4) Evaluation of output efficiency

The all-solid-state half-cells according to Examples 1 to 4 and Comparative Examples 1 to 5 were charged at 0.05 C and discharged at 0.1 C. The percentage of the discharge capacity relative to the charge capacity was calculated, and the results are shown as an output efficiency in Table 2.

### Experimental Example 5) Evaluation of electrical resistance

The electrical resistances (sheet resistance) of the negative electrodes of Examples 1 to 4 and Comparative Examples 1 to 5 were measured using a 4-probe methoud with 46 pins ((XF057 available from HIOKI Co.), and the results are shown in Table 2.

The negative electrode coating layer compositions of Examples 1 to 4 and Comparative Examples 1 to 5 are summarized in Table 1.

**Table 1**

| | Layer separation occurrence | Styrene-butadiene rubber (wt%) | Carbon black (wt%) | Ag (wt%) | Cerium oxide (wt%) |
|---|---|---|---|---|---|
| Example 1 | X | 8 | 86 | 5 | 1 |
| Example 2 | X | 6 | 85 | 4 | 5 |
| Example 3 | X | 4 | 85 | 4 | 7 |
| Example 4 | X | 1 | 85 | 4 | 10 |
| Comparative Example 1 | X | 11 | 85 | 4 | 0 |
| Comparative Example 2 | First layer | 11 | 0 | 0 | 89 |
| | Second layer | 11 | 85 | 4 | 0 |
| Comparative Example 3 | First layer | 11 | 85 | 4 | 0 |
| | Second layer | 11 | 0 | 0 | 89 |
| Comparative Example 4 | X | 10.1 | 85 | 4 | 0.9 |
| Comparative Example 5 | X | 0.9 | 75 | 4 | 30.1 |

As shown in Table 1, layer separations for Examples 1 to 4, and Comparative Examples 1, 4, and 5 did not occur. As Comparative Examples 2 and 3 included two layers, they were regarded as exhibiting layer separation.

**Table 2**

| | Electrode characteristic | Electrochemical performance | | |
|---|---|---|---|---|
| | Electrical resistance (10⁻² Ωcm) | Overvolt age (mV) | Initial efficiency (%) | Output efficiency (%) |
| Example 1 | 4.8 | 17.2 | 85.2 | 95.2 |
| Example 2 | 5.0 | 16.5 | 85.3 | 96.5 |
| Example 3 | 5.2 | 16.4 | 87.5 | 96.2 |
| Example 4 | 5.2 | 16.0 | 88.7 | 96.2 |
| Comparative Example 1 | 4.8 | 17.5 | 84.1 | 94.4 |
| Comparative Example 2 | 7.2 | 19.2 | Short-circuit | Short-circuit |
| Comparative Example 3 | 5.3 | 17.4 | 84.4 | X |
| Comparative Example 4 | 4.8 | 17.5 | 84.0 | 94.4 |
| Comparative Example 5 | 6.4 | 18.2 | 83.2 | 92.3 |

As shown in Table 2, Examples 1 to 4 including the neative electrode having 1 wt% to 30 wt% of CeO₂ in the negative electrode coating layer exhibited low electrical resistance and low overvoltage, and showed excellent initial efficiency and output efficiency.

Whereas, Comparative Example 1 without CeO₂ exhibited high electrical resistance and high overvoltage, and showed low initial efficiency and output efficiency.

In Comparative Examples 2 and 3, in which CeO₂ and Ag were separately included, the layer in which CeO₂ was present separately did not uniformly accommodate lithium ions, thereby exhibiting high overvoltage and low electrochemical performance.

In Comparative Example 4 in which CeO₂ was used in a very small amount, the enhancement of lithium ion speed was not obserbed, and the performance was comparable to that of a case without CeO₂.

Comparative Example 5 in which an excessive amount of CeO₂ was used, exhibited increased electrical resistance and showed increased overvoltage and degraded initial efficiency.

### Experimental Example 6) SEM image and EDAX

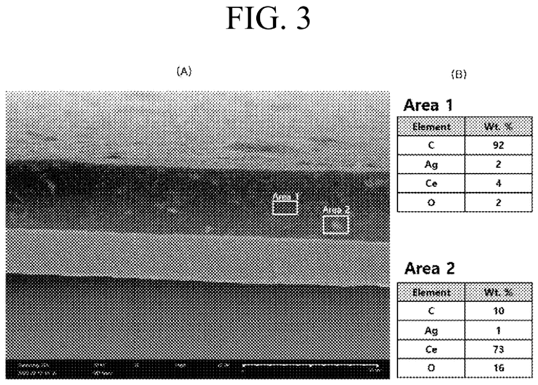

The negative electrode of Example 1 was subjected to cross-section polishing to flatten the cross-section. The SEM image of the surface of the resultng negative electrode is shown in (A) of FIG. 3. The EDAX results for area 1 and area 2 of (A) of FIG. 3 are shown in (B) of FIG. 3.

EDAX results in (B) of FIG. 3 indicate the presence of CeO₂ in the negative electrode of Example 1. In the SEM image in (A) of FIG. 3, the bright color dot was CeO₂, clearly indicating the presence of CeO₂ in the negative electrode.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

## Claims

1. A negative electrode for an all-solid-state battery, comprising:
a negative electrode coating layer comprising a carbon-based material; a metal; and cerium oxide.

2. The negative electrode for the all-solid-state battery of claim 1, wherein cerium oxide is CeO₂, Ce₂O₃, or a combination thereof.

3. The negative electrode for the all-solid-state battery of claim 1, wherein an amount of cerium oxide is 1 wt% to 30 wt% based on the total 100 wt% of the negative electrode coating layer.

4. The negative electrode for the all-solid-state battery of claim 1, wherein an amount of the cerium oxide is 1 wt% to 20 wt% based on the total 100 wt% of the negative electrode coating layer.

5. The negative electrode for the all-solid-state battery of claim 1, wherein the cerium oxide has a particle diameter of 5 nm to 3000 nm.

6. The negative electrode for the all-solid-state battery of claim 1, wherein the carbon-based material is carbon black, acetylene black, denka black, Ketjen black, furnace black, activated carbon, graphene, or a combination thereof.

7. The negative electrode for the all-solid-state battery of claim 1, wherein the metal is Ag, Au, Sn, Zn, Al, Mg, Ge, Cu, In, Ni, Bi, Pt, Pd, or a combination thereof.

8. The negative electrode for the all-solid-state battery of claim 1, wherein the metal is Ag.

9. The negative electrode for the all-solid-state battery of claim 1, wherein in the negative electrode coating layer, the metal is suppored on the carbon-based material.

10. The negative electrode for the all-solid-state battery of claim 1, wherein an the carbon-based material is 20 wt% to 99 wt% based on the total 100 wt% of the negative electrode coating layer.

11. The negative electrode for the all-solid-state battery of claim 1, wherein an amount of the metal is 1 wt% to 50 wt% based on the total 100 wt% of the negative electrode coating layer.

12. The negative electrode for the all-solid-state battery of claim 1, wherein the metal has a size of 5 nm to 800 nm.

13. An all-solid-state battery, comprising:
a negative electrode of any one of claim 1 to claim 12;
a positive electrode; and
a solid electrolyte layer between the negative electrode and the positive electrode.
